# EUROPÄISCHE PATENTSCHRIFT

(11) **EP 0 411 162 B1**
(45) Veröffentlichungstag und Bekanntmachung des Hinweises auf die Patenterteilung: **27.01.1993**
(21) Anmeldenummer: 89112241.8
(22) Anmeldetag: 05.07.1989
(51) Int. Cl.: B01D 53/34, C22B 34/12

(54) **Verfahren zur Entfernung von Chlor aus Abgasen**
Method of removing chlorine from exhaust gases
Procédé pour éliminer du chlore de gaz d'échappement

(43) Veröffentlichungstag der Anmeldung: 06.02.1991
(73) Patentinhaber: KRONOS TITAN-Gesellschaft mbH, D-51307 Leverkusen (DE)
(72) Erfinder: Hartmann, Achim, Dipl.-Ing., D-5024 Pulheim (DE)

(56) Entgegenhaltungen:
- EP-A- 0 255 616
- CH-A- 413 805
- DE-A- 2 131 403
- DE-A- 2 545 342
- DE-A- 3 328 675

## Beschreibung

Die Erfindung betrifft ein Verfahren zur Entfernung von Chlor aus Abgasen, die ständig oder gelegentlich geringe Mengen Chlor enthalten, durch Waschen mit einer Eisen(II)-chlorid enthaltenden wässerigen Lösung in einem Waschsystem.

Bei vielen Prozessen, insbesondere bei der Herstellung von Titandioxid durch Chlorieren von titan- und eisenhaltigen Rohstoffen unter Bildung von Titantetrachlorid und Eisenchlorid und Umsetzen des Titantetrachlorids mit sauerstoffhaltigen Gasen (Chloridprozeß), entstehen Abgase. Diese Abgase enthalten im allgemeinen CO₂, CO, N₂ und oft auch HCl. Die Abgase können aber auch ständig oder gelegentlich geringe Mengen Chlor enthalten. Das ist z. B. häufig dann der Fall, wenn beim Chloridprozeß Betriebsstörungen auftreten. Die Menge des Chlors kann beim Chloridprozeß im allgemeinen bis zu 2 Volumenprozent betragen. Aus Umweltschutzgründen müssen die Abgase von den schädlichen Bestandteilen befreit werden, ehe sie in die Atmosphäre entlassen werden können. In der Regel wurde bisher im allgemeinen so verfahren, daß die Abgase zuerst mit einer alkalischen Lösung, z. B. einer Natriumhydroxidlösung oder Natriumcarbonatlösung, gewaschen und gegebenenfalls anschließend einer Verbrennungsstufe zur Umsetzung des Kohlenmonoxids zugeführt werden. In der alkalischen Lösung werden Chlorwasserstoff und, falls vorhanden, Chlor absorbiert. Während der Chlorwasserstoff zu Natriumchlorid umgesetzt wird, wird bei der Absorption von Chlor Natriumhypochlorit gebildet. Die entstandenen verdünnten Hypochloritlösungen können nicht verwertet werden und müssen unter großem Aufwand beseitigt werden.

Bei der Suche nach anderen Möglichkeiten zur Beseitigung des Chlors aus den Abgasen wurde versucht, die bekannte Umsetzung von Chlor mit einer Eisen(II)-chlorid enthaltenden wässerigen Lösung zunutze zu machen. Es ist aus der AT-B- 260 643 ein Verfahren bekannt, Chlor aus Abgasen dadurch zu beseitigen, daß das Abgas mit einer salzsauren Abfallbeize, die bis zu 300 g/l FeCl₂ und bis zu 100 g/l HCl enthält, gewaschen wird. Dieses Verfahren hat den Nachteil, daß die Umsetzung sehr langsam verläuft, so daß für eine ausreichende Chlorentfernung aus großen Abgasmengen ein erheblicher apparativer Aufwand getrieben werden muß. Um die Umsetzung des Chlors mit dem Eisen(II)-chlorid in einer Eisen(II)-chlorid enthaltenden Lösung zu beschleunigen, wurde in der DE-A- 25 45 342 vorgeschlagen, diese Umsetzung in Anwesenheit von Kupferionen vorzunehmen. Infolge ihres Kupferionengehaltes kann die verbrauchte Lösung nicht ohne weiteres verwertet werden. Deshalb wird sie mit hohem Aufwand regeneriert und direkt wieder zum Waschen des Abgases eingesetzt. Auch bei diesem Verfahren ist der Zeitaufwand für großtechnische Verhältnisse zu hoch.

Es wurde nun überraschenderweise gefunden, daß eine ganz bestimmte Eisen(II)-chlorid enthaltende wässerige Lösung, die als Nebenbestandteil des Chloridprozesses anfällt, eine bisher nicht bekannte hohe Wirksamkeit besitzt.

Bei der Chlorierung des titan- und eisenhaltigen Rohstoffes fällt infolge seines Gehaltes an Eisen neben Titantetrachlorid und geringen Mengen weiterer leichtflüchtiger Metallchloride ein Feststoffgemisch an, das neben nicht umgesetzten Anteilen des Rohstoffes und gegebenenfalls des Reduktionsmittels Metallchloride enthält, wobei - bei geeigneter Reaktionsführung - der größte Teil dieser Metallchloride aus Eisen(II)-chlorid besteht. Weitere Metallchloride, die in untergeordneten Mengen anwesend sind, sind Eisen(III)-chlorid und/oder Chloride anderer Metalle, die als Nebenbestandteile aus dem Rohstoff und gegebenenfalls aus dem Reduktionsmittel stammen, wie z. B. AlCl₃, MnCl₂, CrCl₃, VOCl₃, CaCl₂ und MgCl₂. Außerdem enthält das Feststoffgemisch noch geringe Mengen Titantetrachlorid.

Beim Lösen dieses Feststoffgemisches in Wasser und/oder in einer wässerigen Lösung gehen die Metallchloride in Lösung. Aus der gebildeten Lösung werden die nicht in Lösung gegangenen Bestandteile des Feststoffgemisches, in der Hauptsache nicht umgesetzter Rohstoff und gegebenenfalls Reduktionsmittel, sowie eine geringe Menge von während des Lösevorganges gebildeten unlöslichen Substanzen von der Lösung abgetrennt.

Das Wesen der Erfindung besteht im Einsatz dieser Lösung zum Entfernen von Chlor aus Abgasen.

Es wurde demgemäß ein neues Verfahren zur Entfernung von Chlor aus Abgasen, die ständig oder gelegentlich geringe Mengen Chlor enthalten, durch Waschen mit einer Eisen(II)-chlorid enthaltenden wässerigen Lösung in einem Waschsystem gefunden. Das Verfahren ist dadurch gekennzeichnet, daß als Eisen(II)-chlorid enthaltende wässerige Lösung eine Lösung eingesetzt wird, die beim Lösen eines Feststoffgemisches, welches bei der Chlorierung eines titan- und eisenhaltigen Rohstoffes anfällt und als wesentlichen Bestandteil Eisen(II)-chlorid enthält, und Abtrennen der nicht in Lösung gegangenen Bestandteile des Feststoffgemisches sowie von während des Lösevorganges gebildeten unlöslichen Substanzen erhalten wird, wobei in der Lösung bis etwa 5 Gew% zweiwertiges Eisen enthalten sind.

Diese Lösung kann allgemein zum Waschen von Abgasen eingesetzt werden, die geringe Mengen Chlor enthalten oder bei denen die Gefahr besteht, daß, z. B. bei ungünstigen Betriebsbedingungen, in ihnen geringe Mengen Chlor auftreten können.

Eine besonders bevorzugte Ausführungsform des erfindungsgemäßen Verfahrens ist dadurch gekennzeichnet, daß die Eisen(II)-chlorid enthaltende wässerige Lösung zum Waschen von Abgasen eingesetzt wird, die bei der Herstellung von Titandioxid durch Chlorieren von titan- und eisenhaltigen Rohstoffen unter Bildung von Titantetrachlorid und Eisen(II)-chlorid und Umsetzen des Titantetrachlorids mit sauerstoffhaltigen Gasen anfallen. Bei dieser Ausführungsform des erfindungsgemäßen Verfahrens werden gleich zwei Abfallstoffe des Prozesses verwertet.

In diesem Fall ist es im allgemeinen günstig, wenn für das Waschen der Abgase durch den Prozeß selbst genügend Eisen(II)-chlorid enthaltende wässerige Lösung zur Verfügung gestellt wird. Es ist in diesem Fall vorteilhaft, daß für die Chlorierung ein titan- und eisenhaltiger Rohstoff eingesetzt wird, der auch eine für die Herstellung der zum Waschen erforderlichen Lösung ausreichende Menge Eisen enthält. Hierbei hat es sich als besonders günstig erwiesen, daß als titan- und eisenhaltige Rohstoffe Schlacken und/oder Konzentrate, die aus titan- und eisenhaltigen Erzen durch Entfernen eines Teils des Eisenanteils gewonnen werden, eingesetzt werden.

Es können für die Chlorierung auch andere zu diesem Zweck geeignete und bekannte Rohstoffe eingesetzt werden, wie z. B. natürlicher oder künstlicher Rutil oder titanhaltige Erze wie z. B. Ilmenit. Auch Gemische von verschiedenen titan- und eisenhaltigen Rohstoffen sind geeignet.

Im allgemeinen wird bei der Chlorierung ein Reduktionsmittel eingesetzt, z. B. ein kohlenstoffhaltiges Reduktionsmittel wie Anthrazit oder Koks, z. B. Petrolkoks. Die Chlorierung wird in der Regel in einer Wirbelschicht durchgeführt, aber auch andere Verfahren sind geeignet.

Eine geeignete Ausführungsform der Erfindung ist dadurch gekennzeichnet, daß die Eisen(II)-chlorid enthaltende wässerige Lösung und das Abgas im Waschsystem im Gegenstrom zueinander geführt werden.

Hierbei ist es besonders vorteilhaft, wenn im Waschsystem die Eisen(II)-chlorid enthaltende wässerige Lösung von oben auf eine als Waschvorrichtung dienende Füllkörperkolonne aufgegeben und an ihrem unteren Ende aus ihr abgezogen wird und das Abgas von unten nach oben durch die Füllkörperkolonne hindurchgeführt und in ihr mit der Eisen(II)-chlorid enthaltenden wässerigen Lösung in Kontakt gebracht wird, wobei gegebenenfalls die Zugabe und/oder der Abzug der Eisen(II)-chlorid enthaltenden wässerigen Lösung über mindestens ein außerhalb der Füllkörperkolonne angeordnetes Vorratsgefäß vorgenommen wird.

Eine geeignete Möglichkeit zur Ausführung der Erfindung besteht darin, die Eisen(II)-chlorid enthaltende wässerige Lösung diskontinuierlich dem Waschsystem zuzuführen, innerhalb dieses Waschsystems im Kreislauf zu führen und mehrmals mit jeweils neuen Anteilen des Abgases in Berührung zu bringen und danach diskontinuierlich wieder aus dem Waschsystem abzuziehen. Diese Verfahrensweise führt zu einer optimalen Ausnutzung der Eisen(II)-chlorid enthaltenden wässerigen Lösung im Waschsystem.

Die Eisen(II)-chlorid enthaltende wässerige Lösung kann aber auch kontinuierlich dem Waschsystem zugeführt und wieder aus ihm abgezogen werden. Diese Verfahrensweise ist durch eine besonders einfache Verfahrensführung ausgezeichnet.

Die aus dem Waschsystem abgezogene Eisen(II)-chlorid enthaltende wässerige Lösung kann auf verschiedene Weise weiter behandelt oder verwertet werden. So ist eine besonders bevorzugte Ausführungsform der Erfindung dadurch gekennzeichnet, daß die aus dem Waschsystem abgezogene Eisen(II)-chlorid enthaltende wässerige Lösung beim Lösen des bei der Chlorierung des titan- und eisenhaltigen Rohstoffes anfallenden und als wesentlichen Bestandteil Eisen(II)-chlorid enthaltenden Feststoffgemisches eingesetzt wird.

Dadurch wird die aus dem Waschsystem abgezogene Lösung in günstiger Weise im Rahmen des Titandioxidherstellungsprozesses wiederverwertet.

Werden titan- und eisenhaltige Rohstoffe eingesetzt, die relativ viel Eisen enthalten, dann fällt das als wesentlichen Bestandteil Eisen(II)-chlorid enthaltende Feststoffgemisch ebenfalls in größeren Mengen an. Es ist dann zweckmäßig, nicht die gesamte beim Lösen dieses Feststoffgemisches erhaltene Lösung zum Waschen des Abgases einzusetzen. Es ist dann nach einer besonderen Ausführungsform der Erfindung vorteilhaft, nur einen Teil der beim Lösen des bei der Chlorierung des titan- und eisenhaltigen Rohstoffes anfallenden und als wesentlichen Bestandteil Eisen(II)-chlorid enthaltenden Feststoffgemisches und Abtrennen der nicht in Lösung gegangenen Bestandteile des Feststoffgemisches sowie von während des Lösevorganges gebildeten unlöslichen Substanzen erhaltenen Eisen(II)-chlorid enthaltenden wässerigen Lösung zum Waschen des Abgases einzusetzen und die aus dem Waschsystem abgezogene Lösung mit dem restlichen Anteil dieser Eisen(II)-chlorid enthaltenden wässerigen Lösung zu vereinigen und zusammen mit ihm zu verwerten und/oder aufzuarbeiten.

Die aus dem Feststoffgemisch erhaltene Eisen(II)-chlorid enthaltende wässerige Lösung kann direkt zum Waschen des Abgases eingesetzt werden. Oft wird aber aus dem Feststoffgemisch aus verfahrenstechnischen Gründen oder zum Zwecke ihrer besseren anderweitigen Verwertung eine Lösung mit einem so hohen Eisen(II)-chloridgehalt hergestellt, daß die Lösung nicht unmittelbar zum Waschen des Abgases eingesetzt werden kann. Es wird dann von einer besonderen Ausführungsform des erfindungsgemäßen Verfahrens Gebrauch gemacht, die dadurch gekennzeichnet ist, daß die beim Lösen des bei der Chlorierung des titan- und eisenhaltigen Rohstoffes anfallenden und als wesentlichen Bestandteil Eisen(II)-chlorid enthaltenden Feststoffgemisches und Abtrennen der nicht in Lösung gegangenen Bestandteile des Feststoffgemisches sowie von während des Lösevorganges gebildeten unlöslichen Substanzen erhaltene Eisen(II)-chlorid enthaltende wässerige Lösung mit Wasser und/oder einer wässerigen Lösung verdünnt wird, ehe sie zum Entfernen des Chlors aus den Abgasen eingesetzt wird.

Die aus dem Waschsystem abgezogene Eisen(II)-chlorid enthaltende wässerige Lösung und gegebenenfalls der Anteil der Eisen(II)-chlorid enthaltenden wässerigen Lösung, der nicht zum Waschen des Abgases eingesetzt wird, können, gegebenenfalls nach ihrer Vermischung, in verschiedener Weise anderweitig verwertet werden. Ein Einsatzgebiet für diese Lösung ist beispielsweise die Reinigung von Wasser oder Abwasser.

Es ist zwar möglich, das Abgas direkt der erfindungsgemäßen Waschung mit der Eisen(II)-chlorid enthaltenden wässerigen Lösung zu unterwerfen; aber oft ist es vorteilhafter, das Abgas vor dem Waschen mit der Eisen(II)-chlorid enthaltenden wässerigen Lösung einer Vorbehandlung zu unterwerfen. Hierbei können einerseits Wertstoffe oder bei der erfindungsgemäßen Abgaswäsche störende Substanzen aus dem Abgas herausgeholt werden; andererseits kann das Abgas durch diese Vorbehandlung in geeigneter Weise konditioniert werden, so daß die Wirksamkeit der Abgaswäsche gesteigert und/oder die Prozeßführung während des Waschvorganges erleichtert wird.

Das im Chloridprozeß anfallende Abgas enthält ursprünglich keinen Wasserdampf. Wird dieses Abgas direkt der erfindungsgemäßen Wäsche mit der Eisen(II)-chlorid enthaltenden wässerigen Lösung unterworfen, dann tritt während des Waschvorganges aus dieser Lösung Wasser in das Abgas über, und der Eisengehalt der Lösung steigt an. Es besteht dann unter Umständen die Gefahr, daß es zu unerwünschten Ausscheidungen von Metallsalzen und/oder zu einer ungünstigen Zusammensetzung der Lösung kommt oder daß die Lösung vorzeitig unbrauchbar wird. Es ist in diesen Fällen deshalb in der Regel zweckmäßig, das Abgas durch eine Vorbehandlung mit Wasserdampf zu beladen. Am günstigsten ist es in der Regel, so zu arbeiten, daß der Wasserdampfpartialdruck des Abgases bei seinem Eintritt in die Waschvorrichtung und während der Wäsche dem Wasserdampfpartialdruck der Eisen(II)-chlorid enthaltenden wässerigen Lösung zumindest in etwa gleichkommt. Dadurch wird gewährleistet, daß der Zustand der Eisen(II)-chlorid enthaltenden wässerigen Lösung während des Waschvorganges nicht durch Abgabe oder Aufnahme größerer Wassermengen in ungünstiger Weise geändert wird.

Ein geeignetes Verfahren für die Vorbehandlung des Abgases ist beispielsweise in der DE-A1 33 28 675 beschrieben.

Demgemäß ist eine vorteilhafte Ausführungsform des Verfahrens dadurch gekennzeichnet, daß die Vorbehandlung des Abgases vor dem Waschen mit der Eisen(II)-chlorid enthaltenden wässerigen Lösung dadurch vorgenommen wird, daß
a) das Abgas in einer ersten Absorptionsstufe mit einer wässerigen Lösung von Titanoxidchlorid behandelt wird, deren Konzentration, berechnet als Titandioxid, 100 bis 170 g TiO₂/l beträgt, und
b) das Abgas anschließend in einer zweiten Absorptionsstufe mit Wasser in einer Menge behandelt wird, die geeignet ist, den Chlorwasserstoff zu absorbieren und in Salzsäure einer Konzentration von 27 bis 32 Gew. % HCl umzuwandeln.

Hierbei werden flüchtige Chlorverbindungen aus dem Abgas abgetrennt und in Form technisch verwertbarer Produkte gewonnen. Gleichzeitig wird das Abgas mit Wasserdampf beladen.

Die vorliegende Erfindung beinhaltet eine einzigartige Möglichkeit, durch eine bestimmte Kombination von Verfahrensschritten die im Rahmen des Gesamtprozesses der Herstellung von Titandioxid über das Titantetrachlorid anfallenden Abfallstoffe ohne Einsatz von Stoffen, die von außen zugesetzt werden, aufzuarbeiten und zu verwerten. Es wurde somit auch ein Verfahren zur Herstellung von Titandioxid über Titantetrachlorid gefunden, das aus einer Kombination folgender Stufen besteht:
a) Chlorieren eines titan- und eisenhaltigen Rohstoffes in Anwesenheit eines Reduktionsmittels unter Bildung eines Metallchloride enthaltenden Reaktionsgemisches, wobei der Eisenanteil des Rohstoffes mindestens zu einem wesentlichen Teil zu Eisen(II)-chlorid umgesetzt wird,
b) Abtrennen der schwerer flüchtigen Metallchloride und anderer schwer oder nicht flüchtiger Stoffe in einer ersten Kondensationsstufe, wobei ein Eisen(II)-chlorid enthaltendes Feststoffgemisch erhalten wird,
c) Abscheiden der im wesentlichen aus Titantetrachlorid bestehenden leichter flüchtigen Metallchloride in einer zweiten Kondensationsstufe und Reinigen des Titantetrachlorids, wobei Abgase entstehen, die gelegentlich geringe Mengen Chlor enthalten,
d) Umsetzen des gereinigten Titantetrachlorids in der Dampfphase mit einem sauerstoffhaltigen Gas unter Bildung von Titandioxid und Chlor,
e) Abtrennen des Titandioxids von den chlorhaltigen Gasen,
f) Zurückführen der chlorhaltigen Gase, gegebenenfalls nach einer geeigneten Aufarbeitung, in die Stufe a),
g) Lösen des in Stufe b) erhaltenen Feststoffgemisches in Wasser und/oder einer wässerigen Lösung unter Bildung einer Eisen(II)-chlorid enthaltenden wässerigen Lösung,
h) Abtrennen der in Stufe g) nicht in Lösung gegangenen Bestandteile des Feststoffgemisches sowie von während des Lösevorganges gebildeten unlöslichen Substanzen von der Eisen(II)-chlorid enthaltenden wässerigen Lösung,
i) Einsetzen mindestens eines Teils der Eisen(II)-chlorid enthaltenden wässerigen Lösung, gegebenenfalls nach Verdünnen mit Wasser und/oder einer wässerigen Lösung, beim Waschen der in Stufe c) entstandenen Abgase, wobei die Lösung vor ihrem Einsatz bei der Abgaswäsche bis etwa 5 Gew% zweiwertiges Eisen enthält, nachdem die Abgase gegebenenfalls einer Vorbehandlung unterworfen werden,
k) Rückführen der in Stufe i) eingesetzten Lösung in die Stufe g).

In der Regel treten im Abgas im Falle, daß in ihm Chlor enthalten ist, Chlormengen bis zu 2 Volumenprozent auf.

Die Eisen(II)-chlorid enthaltende wässerige Lösung sollte eine solche Zusammensetzung haben, daß ihr HCl-Partialdruck unter den Betriebsbedingungen nicht die gesetzlich zulässigen Werte übersteigt, denn andernfalls tritt keine ausreichende Chlorwasserstoffentfernung aus dem Abgas auf, und es müssen zusätzliche Maßnahmen für die Entfernung von Chlorwasserstoff durchgeführt werden. Der HCl-Partialdruck der Lösung hängt von der Betriebstemperatur und dem Chloridionengehalt der Lösung ab und kann für den jeweiligen Fall leicht ermittelt werden. Im allgemeinen sollte die Lösung vor ihrem Einsatz bei der Abgaswäsche nicht mehr als 5 Gewichtsprozent zweiwertiges Eisen und nicht mehr als 7 Gewichtsprozent HCl enthalten.

Beim Kontakt der Eisen(II)-chlorid enthaltenden wässerigen Lösung mit dem Abgas wird das Chlor von der Lösung unter Bildung von dreiwertigem Eisen aufgenommen. Gleichzeitig steigt der Chloridionengehalt der Lösung. Außerdem wird durch Aufnahme des im Abgas enthaltenen Chlorwasserstoffes der HCl-Gehalt der Lösung erhöht, womit eine zusätzliche Steigerung des Chloridionengehaltes in der Lösung verbunden ist.

Für die Geschwindigkeit der Chloraufnahme in der Lösung und damit für die Wirksamkeit des erfindungsgemäßen Verfahrens sind mehrere Faktoren maßgebend. So ist sie von der Temperatur des Abgases und der Lösung abhängig. Oft kann das Verfahren bei Raumtemperatur durchgeführt werden; durch eine mäßige Temperaturerhöhung kann die Geschwindigkeit der Chloraufnahme gesteigert werden. Im allgemeinen sollte aber die Temperatur 44 °C nicht überschreiten, da es sonst zu erhöhten HCl-Partialdrucken und wieder zu einer Verringerung der Gasaufnahme in der Lösung kommen kann. Im allgemeinen ist im technischen Betrieb eine Temperatur von 30 bis 40 °C am besten geeignet.

Eine weitere Einflußgröße für das erfindungsgemäße Verfahren ist der Chlorwasserstoffgehalt der Lösung. Die Geschwindigkeit der Chloraufnahme der Lösung steigt mit deren Chlorwasserstoffgehalt. Durch die gleichzeitige Absorption von Chlorwasserstoff steigt während des Waschvorganges der HCl-Gehalt der Lösung. Anfangs begünstigt zwar diese Steigerung der Chlorwasserstoffkonzentration der Lösung deren Chloraufnahmefähigkeit, aber der Chlorwasserstoffgehalt der Lösung darf nicht über ein gewisses Ausmaß ansteigen, da gleichzeitig der HCl-Partialdruck der Lösung zunimmt und Werte oberhalb der gesetzlich zulässigen Werte erreichen kann. Im technischen Maßstab wird man im allgemeinen dafür sorgen, daß der Chlorwasserstoffgehalt der Lösung nicht über 7 Gewichtsprozent ansteigt.

Eine weitere Einflußgröße auf die Geschwindigkeit der Chloraufnahme ist der Gehalt der Lösung an zweiwertigem Eisen. Je höher ihr Gehalt an zweiwertigem Eisen ist, desto wirksamer ist die Lösung. Aber auch hier muß eine obere Grenze beachtet werden, da mit steigendem Gehalt an zweiwertigem Eisen in der zum Waschen gelangenden Lösung und damit mit ihrem steigenden Chloridionengehalt ihr HCl-Partialdruck steigt. Es hat sich im allgemeinen als zweckmäßig erwiesen, für das erfindungsgemäße Verfahren eine Lösung einzusetzen, die einen Gehalt an zweiwertigem Eisen von 3 bis 5 Gewichtsprozent aufweist.

Während des Kontaktes der Lösung mit dem Abgas wird durch das aufgenommene Chlor zweiwertiges Eisen zu dreiwertigem Eisen oxidiert. Dadurch verarmt die Lösung an zweiwertigem Eisen und nimmt ihre Wirksamkeit ab. Um einen Chlordurchschlag zu vermeiden, ist es im allgemeinen zweckmäßig, die Lösung nur solange zu verwenden, bis maximal die Hälfte des in der Lösung vorhandenen Eisens in dreiwertiger Form vorliegt. Bis zu diesem Zustand kann die Eisen(II)chlorid enthaltende wässerige Lösung im Kreislauf durch die Waschvorrichtung geführt werden.

Es kann aber auch so gearbeitet werden, daß die Eisen(II)-chlorid enthaltende wässerige Lösung nur einmal durch die Waschvorrichtung geführt und anschließend aus dem Waschsystem abgezogen wird.

Weitere Einflußgrößen für das erfindungsgemäße Verfahren sind die Verteilung von Flüssigkeit und Gas, die Größe der Waschvorrichtung und die der Flüssigkeit in Relation zur durchgesetzten Gasmenge zur Verfügung gestellte Oberfläche. Durch diese Einflußgrößen wird die Kontaktzeit zwischen Lösung und Abgas maßgeblich beeinflußt.

Alle genannten Einflußgrößen müssen für den jeweiligen Fall in geeigneter Weise aufeinander abgestimmt werden. Bei Beachtung der oben angegebenen Verhältnisse können die jeweils günstigen Werte für die verschiedenen Einflußgrößen durch Versuche leicht ermittelt werden.

Die gewünschte Zusammensetzung der Eisen(II)-chlorid enthaltenden wässerigen Lösung kann bereits durch geeignete Zusätze vor oder während des Lösens des Feststoffgemisches und/oder durch Zusätze zur beim Lösevorgang erhaltenen Lösung eingestellt werden. Ebenso kann der Lösevorgang selbst durch solche Zusätze günstig beeinflußt werden. So ist oft die Zugabe einer geringen Menge Salzsäure zweckmäßig, um die Filtrierbarkeit der Lösung zu verbessern.

Die bei der Bildung der Eisen(II)-chlorid enthaltenden wässerigen Lösung nicht in Lösung gegangenen und aus der Lösung abgetrennten Bestandteile des Feststoffgemisches, die im wesentlichen aus nicht umgesetzten Bestandteilen des eingesetzten titan- und eisenhaltigen Rohstoffes und gegebenenfalls des Reduktionsmittels bestehen, können, zumindest teilweise,nach einer geeigneten Behandlung wieder der Chlorierungsstufe zur Herstellung von Titantetrachlorid zugeführt werden.

Es gelingt durch das erfindungsgemäße Verfahren, bereits mit Kontaktzeiten von weit unterhalb einer Minute, unter Umständen sogar nur von wenigen Sekunden, eine wirksame und ausreichende Entfernung von Chlor aus dem Abgas sicherzustellen.

Für den Waschvorgang können alle bekannten Vorrichtungen eingesetzt werden, die eine große Oberfläche zwischen Abgas und Lösung sicherstellen. Geeignet sind z. B. Füllkörperkolonnen, in die das Abgas von unten eingeführt und auf die die Eisen(II)-chlorid enthaltende Lösung über einen Flüssigkeitsverteiler von oben aufgegeben wird, so daß Lösung und Abgas im Gegenstrom zueinander in Kontakt treten. Es ist hierbei in der Regel zweckmäßig, eine Vorrichtung zur Erwärmung der Lösung vor ihrem Eintritt in die Füllkörperkolonne vorzusehen und/oder die Füllkörperkolonne außen mit einer Heizvorrichtung zu umgeben, um dafür Sorge zu tragen, daß die Betriebstemperatur nicht unter den erforderlichen Wert absinkt.

In den folgenden Beispielen soll die Erfindung näher erläutert werden.

### Beispiel 1

Für die Abgaswäsche wurde als Waschvorrichtung eine Waschkolonne mit einem lichten Durchmesser von 2,5 cm eingesetzt, die auf einer Höhe von 30 cm mit Raschig-Ringen mit einem Durchmesser von 6 mm gefüllt war. Am Kopf der Kolonne wurde über einen Flüssigkeitsverteiler die Eisen(II)-chlorid enthaltende wässerige Lösung aufgegeben. Das zu waschende Gas wurde in den unteren Teil der Waschkolonne eingeführt und nach der Wäsche an ihrem oberen Ende abgezogen.

Es wurde aus einem Reaktionsgemisch, das beim Chlorieren einer titanhaltigen Schlacke gebildet wurde, beim Abtrennen der schwerer flüchtigen Metallchloride und der anderen schwer oder nicht flüchtigen Stoffe (nicht umgesetzte Anteile an Rohstoff und Reduktionsmittel) in einer ersten Kondensationsstufe ein Feststoffgemisch erhalten, das in Wasser gelöst wurde. Nach Abtrennung der nicht in Lösung gegangenen Bestandteile des Feststoffgemisches und einer geringen Menge von während des Lösevorganges gebildeten unlöslichen Substanzen wurde eine Lösung erhalten, die die folgende Zusammensetzung (in Gewichtsprozent) aufwies:
- FeCl₂: 10,0%
- AlCl₃: 2,52
- TiOCl₂: 0,53
- MnCl₂: 1,82
- VOCl₂: 0,33
- CrCl₃: 0,18
- NbCl₅: 0,15
- ZrCl₄: 0,27
- HCl: 1,01

Diese Lösung wird als "Lösung A" bezeichnet.

Zum Vergleich wurde eine Lösung verwendet, die durch Auflösen von technisch reinem Eisen(II)-chlorid-Tetrahydrat (98,5 % FeCl₂·4H₂O) in Wasser hergestellt wurde und die einen Gehalt von 10,0 Gew. % FeCl₂ und 1 Gew. % HCl aufwies.

Diese Lösung wird als "Lösung B" bezeichnet.

Die Wirksamkeit der jeweiligen Lösung wurde über die Menge des Chlors ermittelt, das im behandelten Gas nach Verlassen der Waschkolonne vorhanden war. Zu diesem Zweck wurde das Gas durch eine der Waschkolonne nachgeschaltete Waschflasche, die mit einer 15 %igen NaOH-Lösung beschickt war, hindurchgeleitet.

Nicht in der Waschkolonne von der Eisen(II)-chlorid enthaltenden Lösung aufgenommenes Chlor wurde in der NaOH-Lösung absorbiert und anhand des Chloridionengehaltes dieser Lösung bestimmt.

Als Modell für ein Abgas wurde ein mit Wasserdampf gesättigtes Gasgemisch von 400 l/h N₂ und 8 l/h Cl₂, entsprechend einem Chlorgehalt von 1,88 Volumenprozent, mit einer Temperatur von 30 °C von unten in die Waschkolonne eingeleitet. Auf die Waschkolonne wurden von oben 5 l/h der Waschlösung A, die ebenfalls eine Temperatur von 30 °C aufwies, aufgegeben. Die Kontaktzeit zwischen Gas und Flüssigkeit betrug 1,25 Sekunden.

In der Waschflasche wurde kein Chlor gefunden. Damit war die Entfernung des Chlors aus dem Abgas in der Waschkolonne quantitativ.

### Beispiel 1 A (Vergleichsbeispiel)

Es wurde in der gleichen Weise verfahren wie in Beispiel 1 mit dem einzigen Unterschied, daß anstatt der Lösung A die Lösung B eingesetzt wurde. In diesem Fall wurde in dem gewaschenen Gas nach Verlassen des Waschturmes ein Chlorgehalt von 0,58 Volumenprozent gefunden. Es wurden also nur 69,1 % des im Gasgemisch befindlichen Chlors im Waschturm entfernt.

Beispiel 1 zeigt, daß unter Verwendung der erfindungsgemäßen Eisen(II)-chlorid enthaltenden wässerigen Lösung bereits bei einer Kontaktzeit der Flüssigkeit mit dem Gasgemisch von weniger als 2 Sekunden dieses Gasgemisch, das rund 2 Volumenprozent Chlor enthielt, quantitativ von diesem Chlor befreit wurde, während durch eine technisch reines Eisen(II)-chlorid enthaltende Lösung unter diesen Bedingungen das Chlor nicht in ausreichendem Maße aus dem Gasgemisch entfernt wurde. Damit wurde nachgewiesen, daß die erfindungsgemäße Eisen(II)-chlorid enthaltende wässerige Lösung in überraschender Weise äußerst wirksam ist.

### Beispiel 2

Aus einer Anlage zur Herstellung von Titantetrachlorid durch Chlorieren eines titan- und eisenhaltigen Rohstoffes wurden nach Abtrennung des Titantetrachlorids 3900 m³/h (Gas im Normzustand) eines Abgases mit folgender Zusammensetzung erhalten: 49,0 Vol% CO, 35,0 Vol% CO₂ und 16 Vol% N₂. Dieses Abgas wurde bei einer Vorbehandlung gemäß Anspruch 12 mit Wasserdampf gesättigt.

Für die Wäsche dieses vorbehandelten Abgases wurde ein Waschsystem verwendet, das aus einer als Waschvorichtung dienenden Waschkolonne, die einen lichten Durchmesser von 1,98 m besaß und auf einer Höhe von 5 m mit Raschig-Ringen (50x50 mm) bepackt war, einem Vorratsgefäß, Leitungen, die das Vorratsgefäß mit dem unteren Teil und dem oberen Teil der Waschkolonne verbanden, sowie mit Leitungen zum Zuführen des Abgases und der Waschflüssigkeit in das Waschsystem und zum Abziehen des gereinigten Abgases und der verbrauchten Waschflüssigkeit aus dem Waschsystem bestand.

In das Vorratsgefäß wurden 22 m³ der Lösung A gefüllt. Diese Lösung wurde mit einer Temperatur von 30 °C in einer Menge von 43 m³/h über einen Flüssigkeitsverteiler am Kopf der Waschkolonne aufgegeben, am Unterteil der Waschkolonne wieder abgezogen und über das Vorratsgefäß und die Waschkolonne im Kreis geführt. Das Abgas wurde mit einer Temperatur von 35 °C von unten in die Waschkolonne eingeführt und am oberen Ende der Waschkolonne aus dem Waschsystem abgezogen. Die Kontaktzeit zwischen dem Abgas und der Waschflüssigkeit betrug 11,9 Sekunden.

Der Chlorierungsprozeß wurde kontinuierlich durchgeführt. Im Verlauf von drei Wochen traten dreimal Prozeßstörungen und damit Chlordurchbrüche auf, so daß im Abgas Chlor auftrat, und zwar einmal 45 Minuten lang 0,5 Vol.%, einmal 30 Minuten lang 1,2 Vol.% und einmal 50 Minuten lang 1,8 Vol.%. Bei allen diesen Chlordurchbrüchen wurde das Chlor durch die im Kreislauf geführte Eisen(II)-chlorid enthaltende wässerige Lösung vollständig aufgenommen.

Um die Wirksamkeit dieser Lösung weiter zu dokumentieren, wurden anschließend ohne Erneuerung der Waschflüssigkeit zwei weitere Störfälle simuliert, indem zu dem Abgas vor Eintritt in das Waschsystem Chlor zugefügt wurde, und zwar einmal 180 Minuten lang 0,2 Vol.% und einmal 60 Minuten lang 2,0 Vol.%. Auch in diesen Fällen wurde das Chlor durch die im Kreislauf geführte Eisen(II)-chlorid enthaltende wässerige Lösung vollständig aufgenommen.

Nach diesen Versuchen enthielt die Eisen(II)-chlorid enthaltende wässerige Lösung 4,3 Gew. % FeCl₂ und 5,5 Gew. % FeCl₃. Sie wurde jetzt aus dem Waschsystem abgezogen und neben Wasser zum Lösen einer neuen Charge des beim Chlorieren des titan- und eisenhaltigen Rohstoffes anfallenden eisen(II)-chloridhaltigen Feststoffgemisches eingesetzt.

Es wurden erneut 22 m³ Lösung A in das Vorratsgefäß eingefüllt und im Kreis zwischen Waschkolonne und Vorratsgefäß geführt, und die Abgaswäsche wurde wie oben beschrieben fortgesetzt.

Gleiche Ergebnisse wurden erhalten, wenn die Eisen(II)-chlorid enthaltende wässerige Lösung nicht diskontinuierlich, sondern kontinuierlich in das Waschsystem eingeführt und aus dem Waschsystem abgezogen wurde.

## Patentansprüche

1. Verfahren zur Entfernung von Chlor aus Abgasen, die ständig oder gelegentlich geringe Mengen Chlor enthalten, durch Waschen mit einer Eisen(II)-chlorid enthaltenden wässerigen Lösung in einem Waschsystem,
dadurch gekennzeichnet, daß als Eisen(II)-chlorid enthaltende wässerige Lösung eine Lösung eingesetzt wird, die beim Lösen eines Feststoffgemisches, welches bei der Chlorierung eines titan- und eisenhaltigen Rohstoffes anfällt und als wesentlichen Bestandteil Eisen(II)-chlorid enthält, und Abtrennen der nicht in Lösung gegangenen Bestandteile des Feststoffgemisches sowie von während des Lösevorganges gebildeten unlöslichen Substanzen erhalten wird, wobei in der Lösung bis etwa 5 Gew% zweiwertiges Eisen enthalten sind.

2. Verfahren nach Anspruch 1,
dadurch gekennzeichnet, daß die Eisen(II)-chlorid enthaltende wässerige Lösung zum Waschen von Abgasen, die bei der Herstellung von Titandioxid durch Chlorieren von titan- und eisenhaltigen Rohstoffen unter Bildung von Titantetrachlorid und Eisen(II)-chlorid und Umsetzen des Titantetrachlorids mit sauerstoffhaltigen Gasen anfallen, eingesetzt wird.

3. Verfahren nach Anspruch 2, dadurch gekennzeichnet, daß als titan- und eisenhaltige Rohstoffe Schlacken und/oder Konzentrate, die aus titan- und eisenhaltigen Erzen durch Entfernen eines Teils des Eisenanteils gewonnen werden, eingesetzt werden.

4. Verfahren nach einem oder mehreren der Ansprüche 1 bis 3, dadurch gekennzeichnet, daß die Eisen(II)-chlorid enthaltende wässerige Lösung und das Abgas im Waschsystem im Gegenstrom zueinander geführt werden.

5. Verfahren nach Anspruch 4,
dadurch gekennzeichnet, daß im Waschsystem die Eisen(II)-chlorid enthaltende wässerige Lösung von oben auf eine als Waschvorrichtung dienende Füllkörperkolonne aufgegeben und an ihrem unteren Ende aus ihr abgezogen wird und das Abgas von unten nach oben durch die Füllkörperkolonne hindurchgeführt und in ihr mit der Eisen(II)-chlorid enthaltenden wässerigen Lösung in Kontakt gebracht wird, wobei gegebenenfalls die Zugabe und/oder der Abzug der Eisen(II)-chlorid enthaltenden wässerigen Lösung über mindestens ein außerhalb der Füllkörperkolonne angeordnetes Vorratsgefäß vorgenommen wird.

6. Verfahren nach einem oder mehreren der Ansprüche 1 bis 5, dadurch gekennzeichnet, daß die Eisen(II)-chlorid enthaltende wässerige Lösung diskontinuierlich dem Waschsystem zugeführt, innerhalb dieses Waschsystems im Kreislauf geführt und mehrmals mit jeweils neuen Anteilen des Abgases in Berührung gebracht und danach diskontinuierlich wieder aus dem Waschsystem abgezogen wird.

7. Verfahren nach einem oder mehreren der Ansprüche 1 bis 5, dadurch gekennzeichnet, daß die Eisen(II)-chlorid enthaltende wässerige Lösung kontinuierlich dem Waschsystem zugeführt und wieder aus ihm abgezogen wird.

8. Verfahren nach einem oder mehreren der Ansprüche 1 bis 7, dadurch gekennzeichnet, daß die aus dem Waschsystem abgezogene Eisen(II)-chlorid enthaltende wässerige Lösung beim Lösen des bei der Chlorierung des titan- und eisenhaltigen Rohstoffes anfallenden und als wesentlichen Bestandteil Eisen(II)-chlorid enthaltenden Feststoffgemisches eingesetzt wird.

9. Verfahren nach einem oder mehreren der Ansprüche 1 bis 8, dadurch gekennzeichnet, daß nur ein Teil der beim Lösen des bei der Chlorierung des titan- und eisenhaltigen Rohstoffes anfallenden und als wesentlichen Bestandteil Eisen(II)-chlorid enthaltenden Feststoffgemisches und Abtrennen der nicht in Lösung gegangenen Bestandteile des Feststoffgemisches sowie von während des Lösevorganges gebildeten unlöslichen Substanzen erhaltenen Eisen(II)-chlorid enthaltenden wässerigen Lösung zum Waschen des Abgases eingesetzt wird und die aus dem Waschsystem abgezogene Lösung mit dem restlichen Anteil dieser Eisen(II)-chlorid enthaltenden wässerigen Lösung vereinigt und zusammen mit ihm verwertet und/oder aufgearbeitet wird.

10. Verfahren nach einem oder mehreren der Ansprüche 1 bis 9, dadurch gekennzeichnet, daß die beim Lösen des bei der Chlorierung des titan- und eisenhaltigen Rohstoffes anfallenden und als wesentlichen Bestandteil Eisen(II)-chlorid enthaltenden Feststoffgemisches und Abtrennen der nicht in Lösung gegangenen Bestandteile des Feststoffgemisches sowie von während des Lösevorganges gebildeten unlösliche Substanzen erhaltene Eisen(II)-chlorid enthaltende wässerige Lösung mit Wasser und/oder einer wässerigen Lösung verdünnt wird, ehe sie zum Entfernen des Chlors aus den Abgasen eingesetzt wird.

11. Verfahren nach einem oder mehreren der Ansprüche 1 bis 10, dadurch gekennzeichnet, daß das abgas vor dem Waschen mit der Eisen(II)-chlorid enthaltenden wässerigen Lösung zunächst in einer ersten absorptionsstufe mit einer wässerigen Lösung von Titanoxidchlorid behandelt wird, deren Konzentration, berechnet als Titandioxid 100 bis 170 g TiO₂/l beträgt und das abgas anschließend in einer zweiten absorptionsstufe mit Wasser in einer Menge behandelt wird, die geeignet ist, den Chlorwasserstoff zu absorbieren und in Salzsäure einer Konzentration von 27 bis 32 Gew.% HCl umzuwandeln.

12. Verfahren zur Herstellung von Titandioxid über Titantetrachlorid, bestehend aus einer Kombination folgender Stufen:
a) Chlorieren eines titan- und eisenhaltigen Rohstoffes in Anwesenheit eines Reduktionsmittels unter Bildung eines Metallchloride enthaltenden Reaktionsgemisches, wobei der Eisenanteil des Rohstoffes mindestens zu einem wesentlichen Teil zu Eisen(II)-chlorid umgesetzt wird,
b) Abtrennen der schwerer flüchtigen Metallchloride und anderer schwer oder nicht flüchtiger Stoffe in einer ersten Kondensationsstufe, wobei ein Eisen(II)-chlorid enthaltendes Feststoffgemisch erhalten wird,
c) Abscheiden der im wesentlichen aus Titantetrachlorid bestehenden leichter flüchtigen Metallchloride in einer zweiten Kondensationsstufe und Reinigen des Titantetrachlorids, wobei Abgase entstehen, die gelegentlich geringe Mengen Chlor enthalten,
d) Umsetzen des gereinigten Titantetrachlorids in der Dampfphase mit einem sauerstoffhaltigen Gas unter Bildung von Titandioxid und Chlor,
e) Abtrennen des Titandioxids von den chlorhaltigen Gasen,
f) Zurückführen der chlorhaltigen Gase, gegebenenfalls nach einer geeigneten Aufarbeitung, in die Stufe a),
g) Lösen des in Stufe b) erhaltenen Feststoffgemisches in Wasser und/oder einer wässerigen Lösung unter Bildung einer Eisen(II)-chlorid enthaltenden wässerigen Lösung,
h) Abtrennen der in Stufe g) nicht in Lösung gegangenen Bestandteile des Feststoffgemisches sowie von während des Lösevorganges gebildeten unlöslichen Substanzen von der Eisen(II)-chlorid enthaltenden wässerigen Lösung,
i) Einsetzen mindestens eines Teils der Eisen(II)-chlorid enthaltenden wässerigen Lösung, gegebenenfalls nach Verdünnen mit Wasser und/oder einer wässerigen Lösung, beim Waschen der in Stufe c) entstandenen Abgase, wobei die Lösung vor ihrem Einsatz bei der Abgaswäsche bis etwa 5 Gew% zweiwertiges Eisen enthält, nachdem die Abgase gegebenenfalls einer Vorbehandlung gemäß Anspruch 11 unterworfen werden,
k) Rückführen der in Stufe i) eingesetzten Lösung in die Stufe g).

## Claims

1. A process for removing chlorine from waste gases which continuously or occasionally contain small quantities of chlorine, by scrubbing with an aqueous solution containing iron(II) chloride in a scrubbing system, characterised in that by way of aqueous solution containing iron(II) chloride, a solution is used which is obtained by the dissolution of a solid mixture, which latter is formed during the chlorination of a raw material containing titanium and iron and the main constituent of which is iron(II) chloride, and by the separation of those constituents of the solid mixture which have not dissolved and of insoluble substances formed during the process of dissolution, where up to approximately 5 % by weight bivalent iron is contained in the solution.

2. A process as claimed in Claim 1, characterised in that the aqueous solution containing iron(II) chloride is used for the scrubbing of waste gases which are formed in the production of titanium dioxide by the chlorination of raw materials containing titanium and iron, with the formation of titanium tetrachloride and iron(II) chloride and the reaction of titanium tetrachloride with gases containing oxygen.

3. A process as claimed in Claim 2, characterised in that slags and/or concentrates, obtained from ores containing titanium and iron by the removal of a part of the iron constituent, are used as raw materials containing titanium and iron.

4. A process as claimed in one or more of Claims 1 to 3, characterised in that the aqueous solution containing iron(II) chloride and the waste gas are conducted in counterflow to one another in the scrubbing system.

5. A process as claimed in Claim 4, characterised in that in the scrubbing system the aqueous solution containing iron(II) chloride is supplied from above to a packed column serving as scrubbing device and is discharged therefrom at the lower end of said column, and the waste gas is conducted upwards through the packed column wherein it is brought into contact with the aqueous solution containing iron(II) chloride, where optionally the addition and/or discharge of the aqueous solution containing iron(II) chloride is carried out via at least one storage vessel arranged outside of the packed column.

6. A process as claimed in one or more of Claims 1 to 5, characterised in that the aqueous solution containing iron(II) chloride is discontinuously supplied to the scrubbing system, circulated within this scrubbing system, and is brought several times into contact with respective new constituents of the waste gas and is then discontinuously discharged from the scrubbing system.

7. A process as claimed in one or more of Claims 1 to 5, characterised in that the aqueous solution containing iron(II) chloride is continuously supplied to and discharged from the scrubbing system.

8. A process as claimed in one or more of Claims 1 to 7, characterised in that the aqueous solution containing iron(II) chloride discharged from the scrubbing system is used in the dissolution of the solid mixture which is formed during the chlorination of the raw material containing titanium and iron and the main constituent of which is iron(II) chloride.

9. A process as claimed in one or more of Claims 1 to 8, characterised in that only a part of the aqueous solution which contains iron(II) chloride and which is obtained by the dissolution of the solid mixture, which latter is formed during the chlorination of the raw material containing titanium and iron and the main constituent of which is iron(II) chloride, and by the separation of those constituents of the solid mixture which have not dissolved and of insoluble substances formed during the process of dissolution, is used for the scrubbing of the waste gas, and the solution discharged from the scrubbing system is combined with the remainder of this aqueous solution containing iron(II) chloride and utilized and/or processed together therewith.

10. A process as claimed in one or more of Claims 1 to 9, characterised in that the aqueous solution which contains iron(II) chloride and which is obtained by the dissolution of the solid mixture, which latter is produced during the chlorination of the raw material containing titanium and iron and the main constituent of which is iron(II) chloride, and by the separation of those constituents of the solid mixture which have not dissolved and of insoluble substances formed during the process of dissolution, is diluted with water and/or an aqueous solution before it is used to remove the chlorine from the waste gases.

11. A process as claimed in one or more of Claims 1 to 10, characterised in that prior to the scrubbing with the aqueous solution containing iron(II) chloride, the waste gas is firstly treated in a first absorption stage with an aqueous solution of titanium chloride oxide, the concentration of which, calculated as titanium dioxide, amounts to 100 to 170 g TiO₂/l, whereupon the waste gas is treated in a second absorption stage with a quantity of water suitable to absorb the hydrogen chloride and to convert it into hydrochloric acid in a concentration of 27 to 32 % by weight HCl.

12. A process for the production of titanium dioxide via titanium tetrachloride, comprising a combination of the following steps:
a) Chlorination of a raw material containing titanium and iron in the presence of a reducing agent, with the formation of a reaction mixture containing metal chlorides, where the iron constituent of the raw material is at least to a substantial extent converted into iron(II) chloride;
b) separation of the less volatile metal chlorides and other less volatile or non-volatile substances in a first condensation stage, whereby a solid mixture containing iron(II) chloride is obtained;
c) separation of the more readily volatile metal chlorides consisting substantially of titanium tetrachloride in a second condensation stage and purification of the titanium tetrachloride, whereby waste gases are formed which occasionally contain small quantities of chlorine;
d) reaction of the purified titanium tetrachloride in the vapour phase with a gas containing oxygen with the formation of titanium dioxide and chlorine;
e) separation of the titanium dioxide from the gases containing chlorine;
f) recycling of the gases containing chlorine, optionally after suitable processing, to step a),
g) dissolution of the solid mixture obtained in step b) in water and/or an aqueous solution with the formation of an aqueous solution containing iron(II) chloride;
h) separation of those constituents of the solid mixture which have not dissolved in step g) and of insoluble substances formed during the process of dissolution from the aqueous solution containing iron(II) chloride;
i) use of at least a part of the aqueous solution containing iron(II) chloride, optionally after dilution with water and/or an aqueous solution, for the scrubbing of the waste gases produced in step c), where the solution contains up to approximately 5 % by weight bivalent iron prior to its use for the scrubbing of the waste gas, after the waste gases have been optionally subjected to a preliminary treatment in accordance with Claim 11;
k) recycling of the solution used in step i) to step g).

## Revendications

1. Procédé pour éliminer le chlore des gaz d'échappement contenant en permanence ou à l'occasion de faibles quantités de chlore, par lavage, dans un système de lavage, avec une solution aqueuse contenant du chlorure de fer(II), caractérisé en ce qu'on utilise en tant que solution aqueuse contenant du chlorure de fer(II) une solution que l'on obtient par dissolution d'un mélange de matières solides, obtenu lors de la chloration d'une matière première contenant du titane et du fer et dont le constituant principal est le chlorure de fer(II), et séparation des constituants du mélange de matières solides qui ne sont pas entrées en solution, ainsi que des substances insolubles formées pendant l'opération de dissolution, la solution contenant jusqu'à environ 5 % en poids de fer divalent.

2. Procédé selon la revendication 1, caractérisé en ce que la solution aqueuse contenant du chlorure de fer(II) utilisée pour laver des gaz d'échappement est formée lors de la préparation du dioxyde de titane par chloration de matières premières contenant du titane et du fer, avec formation de tétrachlorure de titane et de chlorure de fer(II), et réaction du tétrachlorure de titane avec des gaz oxygénés.

3. Procédé selon la revendication 2, caractérisé en ce qu'on utilise en tant que matières premières contenant du titane et du fer des scories et/ou des concentrés obtenus à partir de minerai contenant du titane et du fer, par élimination d'une partie de la fraction fer.

4. Procédé selon l'une ou plusieurs des revendications 1 à 3, caractérisé en ce que la solution aqueuse contenant du chlorure de fer(II) et le gaz d'échappement sont envoyés dans le système de lavage à contre-courant l'un par rapport à l'autre.

5. Procédé selon la, revendication 4, caractérisé en ce que, dans le système de lavage, la solution aqueuse contenant du chlorure de fer(II) est introduite par le haut sur une colonne garnie servant de dispositif de lavage et en est soutirée à son extrémité inférieure, et le gaz d'échappement traverse la colonne garnie de bas en haut et y est mis en contact avec la solution aqueuse contenant du chlorure de fer(II), l'addition et/ou le soutirage de la solution aqueuse contenant du chlorure de fer(II) étant éventuellement mise en oeuvre par l'intermédiaire d'au moins un réservoir situé à l'extérieur de la colonne garnie.

6. Procédé selon l'une ou plusieurs des revendications 1 à 5, caractérisé en ce que la solution aqueuse contenant du chlorure de fer(II) est introduite d'une manière discontinue dans le système de lavage, circule en circuit fermé à l'intérieur de ce système de lavage et est plusieurs fois mis en contact avec chaque fois de nouvelles fractions du gaz d'échappement, pour être ensuite soutirée d'une manière discontinue du système de lavage.

7. Procédé selon l'une ou plusieurs des revendications 1 à 5, caractérisé en ce que la solution aqueuse contenant du chlorure de fer(II) est introduite dans le système de lavage en continu et en est soutirée en continu.

8. Procédé selon l'une ou plusieurs des revendications 1 à 7, caractérisé en ce que la solution aqueuse contenant du chlorure de fer(II) et soutirée du système de lavage est utilisée lors de la dissolution du mélange de matières solides qui se forme lors de la chloration de la matière première contenant du titane et du fer et qui contient comme constituant principal du chlorure de fer(II).

9. Procédé selon l'une ou plusieurs des revendications 1 à 8, caractérisé en ce qu'on n'utilise pour le lavage du gaz d'échappement qu'une partie de la solution aqueuse contenant du chlorure de fer(II), obtenue lors de la dissolution du mélange de matières solides qui se forme lors de la chloration de la matière première contenant du titane et du fer et qui contient comme constituant principal du chlorure de fer(II), et lors de la séparation des constituants non dissous du mélange de matières solides, ainsi que des substances insolubles formées pendant l'opération de dissolution, et que la solution soutirée du système de lavage est combinée avec le reste de cette solution aqueuse contenant du chlorure de fer(II) et, en même temps que cette dernière, est valorisée et/ou traitée.

10. Procédé selon l'une ou plusieurs des revendications 1 à 9, caractérisé en ce que la solution aqueuse contenant du chlorure de fer(II) obtenue par la dissolution du mélange de matières solides qui se forme lors de la chloration de la matière première contenant du titane et du fer et qui contient comme constituant principal du chlorure de fer(II), et par la séparation des constituants non dissous du mélange de matières solides ainsi que des substances insolubles formées pendant la dissolution, est diluée à l'eau et/ou avec une solution aqueuse avant d'être utilisée pour éliminer le chlore des gaz d'échappement.

11. Procédé selon l'une ou plusieurs des revendications 1 à 10, caractérisé en ce que le gaz d'échappement, avant le lavage avec la solution aqueuse contenant du chlorure de fer(II), est d'abord traité dans une première étape d'absorption avec une solution aqueuse d'oxychlorure de titane, dont la concentration,.calculée en dioxyde de titane, est de 100 à 170 g de TiO₂/l, le gaz d'échappement étant ensuite traité, dans une deuxième étape d'absorption, avec de l'eau en une quantité suffisante pour absorber le chlorure d'hydrogène et pour le convertir en acide chlorhydrique à une concentration de 27 à 32 % en poids de HCl.

12. Procédé pour préparer du dioxyde de titane par l'intermédiaire de tétrachlorure de titane, qui comprend une combinaison des étapes suivantes :
a) chloration d'une matière première contenant du titane et du fer, en présence d'un réducteur, avec formation d'un mélange réactionnel contenant des chlorures métalliques, le fer contenu dans la matière première étant, au moins pour une part importante, converti en chlorure de fer(II),
b) séparation des chlorures métalliques plus difficilement volatils et d'autres substances difficilement volatiles ou non volatiles dans une première étape de condensation, ce qui permet d'obtenir un mélange de matières solides contenant du chlorure de fer(II),
c) séparation des chlorures métalliques plus facilement volatils, constitués essentiellement de tétrachlorure de titane, dans une deuxième étape de condensation, et purification du tétrachlorure de titane, avec formation de gaz d'échappement qui à l'occasion contiennent de faibles quantités de chlore,
d) réaction, en phase vapeur, du tétrachlorure de titane purifié avec un gaz oxygéné, avec formation de dioxyde de titane et de chlore,
e) séparation du dioxyde de titane et des gaz chlorés,
f) renvoi des gaz chlorés, éventuellement après un traitement approprié, dans l'étape a),
g) dissolution du mélange de matières solides obtenu à l'étape b), dans de l'eau et/ou dans une solution aqueuse, avec formation d'une solution aqueuse contenant du chlorure de fer(II),
h) séparation des constituants qui ne se sont pas dissous dans l'étape g) du mélange de matières solides, ainsi que des substances insolubles formées pendant la dissolution, d'avec la solution aqueuse contenant du chlorure de fer(II),
i) utilisation d'au moins une partie de la solution aqueuse contenant du chlorure de fer(II), éventuellement après dilution avec de l'eau et/ou une solution aqueuse, lors du lavage des gaz d'échappement qui se sont formés dans l'étape c), la solution, avant son utilisation dans les eaux de lavage des gaz d'échappement, contenant jusqu'à environ 5 % en poids de fer divalent, et ce après que les gaz d'échappement ont été éventuellement soumis à un traitement préalable selon la revendication 11,
k) renvoi, à l'étape g), de la solution utilisée dans l'étape i).
